# FASCICULE DE BREVET EUROPEEN

(11) **EP 2 951 898 B1**
(45) Date de publication et mention de la délivrance du brevet: **16.11.2016**
(21) Numéro de dépôt: 14709723.2
(22) Date de dépôt: 31.01.2014
(51) Int. Cl.: H02G 3/00, H02G 3/08, H02G 3/18

(54) **SYSTÈME DE CÂBLAGE DE STRUCTURES IMMOBILIÈRES**
VERDRAHTUNGSSYSTEM FÜR BAUKONSTRUKTIONEN
WIRING SYSTEM FOR BUILDING STRUCTURES

(30) Priorité: 31.01.2013 FR 1350854
(43) Date de publication de la demande: 09.12.2015
(73) Titulaire: Ingetel B E T, 78720 Senlisse (FR)
(72) Inventeur: GENIN, Gilles, F-78720 Senlisse (FR)
(74) Mandataire: Pontet Allano & Associes
(86) Numéro de dépôt international: PCT/FR2014/050174
(87) Numéro de publication internationale: WO 2014/118472

(56) Documents cités:
- WO-A1-98/32204
- FR-A1- 2 467 498
- FR-A1- 2 609 218
- US-A- 6 060 660
- US-A1- 2012 068 583

## Description

La présente invention concerne un système de câblage de structure immobilière ou réseau IT (Technologies de l'Information) pour acheminer des signaux basse tension, tels que des signaux audio, vidéo et de données, à partir d'un répartiteur général vers des périphériques ou terminaux, tels que des ordinateurs, des photocopieurs, des imprimantes, des téléphones, des fax, des caméras, des équipements de systèmes de sécurité et de gestion technique, etc. Le domaine d'application de la présente invention est clairement celui du câblage de structure immobilière, notamment de locaux d'activité tertiaire, comme les locaux de bureau.

L'architecture conventionnelle et pratiquement universelle pour un système de câblage d'une structure immobilière comprend des sous-répartiteurs reliés en amont au répartiteur général et desservant en aval de manière individuelle avec un plan en étoile des points d'accès aux réseaux IT constitués par des connecteurs de différents types sur lesquels on peut raccorder les périphériques souhaités situés dans leurs espaces d'exploitation. Dans une structure immobilière comprenant plusieurs étages ou présentant une superficie supérieure à 1000 m², on peut par exemple prévoir un seul répartiteur général qui alimente des sous-répartiteurs installés à chaque étage ou dans chaque tranche de superficie de 1000 m² en moyenne de la structure immobilière. Des câbles sont alors tirés à partir des différents sous-répartiteurs pour alimenter les différents espaces d'exploitation.

La mise en oeuvre des différents sous-répartiteurs nécessite un local technique par étage ou par tranche de superficie et le tirage d'un nombre très important de câbles en étoile à partir de chaque sous-répartiteur. Cela engendre une perte importante de place liée à l'exigence d'un local technique par étage ou par tranche, un impact et des exigences techniques contraignantes sur l'environnement d'installation du système de câblage et une perte importante de temps pour sa mise en place . D'autre part, cette architecture en étoile nécessite des longueurs de câbles très importantes dont les coûts ne cessent d'augmenter avec la flambée du cours du cuivre. L'approche systématique de l'ingénierie recommandée du système de câblage conventionnel, amène à réaliser une distribution anticipée des espaces d'exploitation, dimensionnée en fonction des superficies des espaces à desservir, conduisant à déployer un volume surnuméraire de points d'accès, constituant ainsi une dépense inutile et menant à l'application d'une approche technique d'ingénierie qui ne prend pas en compte l'écoresponsabilité requise dorénavant par le marché tant en termes de bilan carbone d'installation et d'exploitation des infrastructures de câblage que de dépense énergétique des réseaux IT qu'elles supportent, le modèle reposant sur une concentration dans les locaux sous-répartiteurs, des équipements électroniques des réseaux IT requérant un environnement fonctionnel contrôlé, générant une consommation électrique importante. Par ailleurs, ce système de câblage quasi universel n'offre aucune modularité du fait de la rigidité d'exploitation que constituent le local sous-répartiteur et la distribution étoilée à partir de ces locaux desservant les espaces d'exploitation des terminaux IT dans la structure immobilière. Dès que l'on veut réaffecter, réorganiser, réhabiliter un espace d'exploitation ou y augmenter le nombre des connecteurs, ou encore diviser en lots les espaces d'exploitation d'une structure immobilière et les associer ou dissocier en fonction de l'évolution des besoins des exploitants, il faut revoir partiellement ou totalement le système de câblage en étoile, ce qui génère des coûts importants d'exploitation et une obsolescence prématurée des composants constituant le système de câblage, du fait qu'ils doivent être remplacés bien avant la fin de leur garantie d'exploitation apportée par leurs fabricants. Il faut également tenir compte du fait que le modèle standard définissant le système de câblage quasi-universel a été élaborée il y a plus de 20 ans à une époque où le souci était de conférer au système de câblage la capacité d'intégrer des systèmes IT s'appuyant sur des réseaux hétérogènes sans tenir compte de l'éco-responsabilité des installations, alors que dorénavant le marché requiert essentiellement d'intégrer des systèmes IT reposant sur des réseaux de technologie homogène basée sur le protocole IP (Internet Protocol) et impose réglementairement, la prise en compte de mesures éco-responsables afin de respecter les réglementations thermiques imposées lors de la construction ou de la réhabilitation d'une structure immobilière. Enfin, les services IT requis par les exploitants des structures immobilières, contrairement à ceux requis et apportés par les autres lots techniques du bâtiment, évoluent rapidement ainsi que par voie de conséquence les exigences sur les systèmes, réseaux et infrastructures nécessaires à leurs délivrances qui eux-mêmes sont basées sur des normes sujettes à de nombreuses et fréquentes évolutions et remplacements par de nouvelles normes émergentes, rendant ainsi impossible l'anticipation des besoins en termes d'infrastructures de câblage et de réseaux IT au-delà de 3 à 5 ans, d'où la nécessaire flexibilité d'exploitation qui doit être conférée au système de câblage d'une structure immobilière dont la durée d'exploitation est d'au moins 30 ans. Une architecture conventionnelle est connue de WO 98/32204 A1.

Par conséquent, ce système de câblage, bien que quasi universelle, présente de nombreux désavantages dans des plans très divers, tels que la perte de place, un temps de mise en oeuvre important, un câblage en étoile coûteux et non modulaire, une obsolescence rapide, l'absence de prise en compte des paramètres de bilan carbone et de consommation électrique des infrastructures de câblage et des réseaux IT, etc.

La présente invention a pour but de remédier aux inconvénients précités de l'art antérieur en définissant un nouveau type de système de câblage qui se passe des sous-répartiteurs conventionnels et du réseau de câblage en étoile à partir des sous répartiteurs. Le système de câblage de l'invention doit permettre une mise en oeuvre très rapide avec des équipements de base conventionnels disponibles sur le marché. Le système de câblage de l'invention doit offrir une grande modularité d'exploitation sans devoir revoir l'infrastructure de câblage. Enfin, le nouveau système de câblage de l'invention doit permettre une économie substantielle en termes de bilan carbone, d'énergie électrique consommée par les réseaux IT et leurs systèmes annexes, ainsi que de longueur de câbles et de quantité de composants à installer, réduisant ainsi le temps de mise en oeuvre et les coûts liés au cuivre. Un des objectifs de la présente invention est de réaliser un système de câblage éco-responsable basée sur les standards publics applicables et constructeur agnostique, présentant une architecture quelconque et multi-forme exclusivement constituée de composants modulaires, pré-montés, pré-assemblés ou pré-connectés permettant ainsi une mise en oeuvre rapide de type LEGO (marque déposée) et une totale flexibilité d'exploitation. En effet, un des objectifs de la présente invention est de réduire au minimum le temps nécessaire pour la mise en oeuvre et l'adaptation de l'infrastructure du câblage et des réseaux IT qu'elle supporte, en fonction des évolutions des besoins en terme de connectivité des terminaux IT.

Pour atteindre ces différents buts et objectifs, la présente invention propose un système de câblage de locaux de structure immobilière, notamment à usage tertiaire, comprenant :
- un répartiteur général installé dans un local technique, le répartiteur général comprenant au moins un tiroir optique pour la réception de cassettes optiques,
- au moins un trunk optique connecté à une cassette optique du répartiteur général et s'étendant dans un espace d'exploitation,
- au moins un câble d'alimentation en moyenne tension qui suit le trunk optique,
- au moins un PCA installé dans l'espace d'exploitation et raccordé au trunk optique, le PCA contenant au moins :
   - au moins un switch industriel au format DIN ou 19",
   - au moins une alimentation pour le switch industriel relié au câble d'alimentation,
   - au moins un boitier DIN pourvu de blocs de connexion optiques auxquels est raccordé le trunk optique,
   - au moins un rail DIN pour le montage du boitier DIN,
   - des jarretières optiques (91) reliant les blocs de connexion optiques au switch industriel,
   - des cordons et/ou prolongateurs RJ45 et/ou bretelles optiques issues du caisson et raccordées aux périphériques installées dans l'espace d'exploitation.

Par « trunk », on entend un câble dont les conducteurs sont déjà pourvus de connectiques pré-montées à leurs extrémités et testés par le fabricant.

L'architecture du système de câblage de l'invention est totalement différente de celle de l'art antérieur, étant donné qu'il n'y a plus de sous-répartiteurs, ni de réseau de câblage en étoile qui s'étend à partir du sous-répartiteur. La présente invention introduit la notion essentielle de Point de Consolidation Actif dit PCA constituant les noeuds de connexion des terminaux aux réseaux IT, disposés de façon amovible sur l'infrastructure de câblage optique et/ou paires torsadées directement dans les espaces d'exploitation et à proximité des terminaux qu'ils connectent . Chaque Point de Consolidation Actif comprend un équipement électronique de type switch industriel ou durci et de la connectique optique et/ou de paires torsadées. Les PCA remplacent en quelque sorte les sous-répartiteurs classiques, avec comme principale différence que les PCA sont installés au plus près des terminaux dans l'espace d'exploitation, alors que les sous-répartiteurs classiques sont installés dans des locaux techniques et nécessitent un réseau de câblage conséquent pour atteindre les terminaux dans les espaces d'exploitation. Le PCA est directement installé dans l'espace d'exploitation, et non pas dans un local technique. L'utilisation d'un switch industriel, par exemple de type durci, est également novatrice dans le domaine du câblage de structure immobilière, ceux-ci n'étant jusqu'à présent employés que lorsque l'environnement fonctionnel est difficile, comme dans des sites industriels. Ce système de câblage offre par ailleurs une grande modularité, étant donné qu'il suffit d'intervenir au niveau du PCA qui est installé dans l'espace d'exploitation pour modifier ou redistribuer les connecteurs sur lesquels viennent se raccorder les terminaux. On peut également remarquer que le rapprochement du PCA des terminaux qu'il rattache, permet de réduire d'au moins 80% la longueur des câbles cuivre distribuant les terminaux et d'exploiter des consommables aisément amovibles pour les connecter au PCA, permettant d'aisément redistribuer les points d'accès réseau dans les espaces d'exploitation et d'en changer le médium optique ou paires torsadées exploité ou encore de modifier la quantité de points d'accès réseau distribués dans un espace donné.

Avantageusement, le système de câblage comprend plusieurs PCA montés en série à l'aide de trunks à partir du PCA recevant le trunk provenant du répartiteur général, constituant ainsi l'infrastructure de base du câblage sur laquelle un nombre variable de trunks et de PCA sont ajoutés selon les emplacements et dans la quantité requise pour connecter tous les terminaux IT dans leurs environnements d'exploitation ou selon les superficies des espaces d'exploitation de la structure immobilière. Un ou plusieurs PCA permettent de rattacher une partie ou l'ensemble de l'infrastructure de câblage au(x) noeud(s) central(aux) des réseaux IT situé(s) dans le(s) répartiteur(s) général(aux). La nouvelle infrastructure de câblage inventée peut revêtir n'importe quelle forme d'architecture en étoile, en bus, en arbre, en anneau ou un mix de ces topologies, la forme en anneau permet de faire circuler les informations dans un sens ou dans un autre. Les PCA étant aisément amovibles, ils peuvent être selon les besoins déplacés à n'importe quel emplacement, de même que des PCA peuvent être ajoutés ou supprimés sans interruption de services réseau.

Lorsque le trunk forme un anneau optique sur lequel plusieurs PCA sont montés en série, un des PCA de l'anneau constitue un PCA de pont qui est relié au répartiteur général par le trunk optique. Ce PCA de pont comprend ainsi un port de plus que les autres PCA de l'anneau.

Selon une autre caractéristique de l'invention, le câble d'alimentation peut être un bus électrique flexible, le PCA étant relié au bus électrique par un cordon électrique équipé d'un connecteur par contact auto-dénudant en prise avec le bus électrique. Ainsi, le câblage de base ne comprend qu'un seul trunk et qu'un bus électrique flexible, qui peuvent être associés et facilement étendus pour relier les différents PCA.

Selon un autre aspect additionnel intéressant de l'invention, l'infrastructure de base du câblage peut être suivant le besoin, complétée par une distribution à paires torsadées disposée en étoile à partir du ou des répartiteurs.généraux, pour le support de liaisons non-IP. Cette distribution à paires torsadées dessert chacun des PCA et est construite à l'aide de trunks connectés au(x) répartiteur(s) général(aux) qui est équipé d'un ensemble de connexion pré-assemblé comprenant un module 110 préconnectorisé sur un connecteur RJ21, le module 110 étant reçu dans un panneau 19"monté sur un rack 19" ou sur un rail DIN à l'aide d'un adaptateur et d'une semelle DIN au répartiteur, le trunk de paires torsadées reliant le connecteur RJ21 à un autre ensemble de connexion pré-assemblé module 110/connecteur RJ21 installé par exemple dans une gaine technique ou un autre emplacement de l'espace d'exploitation de la structure immobilière, au moins un trunk de paires torsadées reliant l'ensemble de connexion à un connecteur RJ45 d'un boitier DIN ou d'un panneau 19" installé dans le contenant du PCA. Ce réseau de paires torsadées permet de véhiculer les liaisons non-IP telles que celles des téléphones, fax traditionnels ou encore des terminaux vidéo, ainsi que des signaux de retour permettant de fournir des informations relatives à l'état d'ouverture ou à l'environnement proche du PCA par exemple.

Avantageusement, l'ensemble de connexion pré-assemblé module 110/connecteur RJ21 installé dans l'espace d'exploitation relie en étoile les différents PCA au moyen de trunks de 4 paires torsadées respectifs. Cette disposition en étoile constitue pour ainsi dire le seul vestige du système de câblage quasi universel commenté ci-dessus. Elle est toutefois extrêmement réduite, puisque l'essentiel des informations est véhiculé en IP à travers le trunk optique de l'infrastructure de base du câblage.

Les PCA constituent un module essentiel de la présente invention et leur disposition dans l'espace de travail est particulièrement importante. Le PCA comprend un caisson qui repose sur un châssis adapté intégrable en faux plancher, dans un coffret adapté à l'intégration de composants exclusivement au format DIN, apte à se loger en gaine technique et en mobilier. Selon une forme de mise en oeuvre intéressante, le PCA comprend un caisson reçu dans un châssis fixe apte à être logé dans un faux plancher, le caisson pivotant autour d'un axe horizontal à partir d'une position intégrée de manière à exposer une face latérale d'entrée du caisson dans une position extraite. Avantageusement, le caisson est sollicité par un vérin dans la position extraite, la face latérale d'entrée formant avantageusement un couvercle muni d'un système de verrouillage qui permet de verrouiller à la fois le couvercle en position fermée et le caisson en position intégrée. L'information relative au verrouillage ou au déverrouillage du couvercle du caisson peut être transmise en retour sur une paire de la distribution en paires torsadées. Le caisson intégré au faux plancher, permet une intervention aisée sur le PCA en ouvrant simplement les plaques de faux plancher articulées intégrées au châssis à l'aide d'un outil spécifiquement prévu à cet effet et en déverrouillant le couvercle du caisson, ce qui permet son pivotement pour faciliter son accès. L'opérateur peut alors comme à partir de tout autre contenant de PCA, lorsque ses besoins de connectivité évoluent dans l'espace d'exploitation desservi par le PCA, modifier les connexions au PCA, ajouter, enlever ou remplacer un switch ou le module réseau d'un switch en place, ajouter, enlever ou déplacer un consommable (cordon, prolongateur de consolidation ou bretelle optique) dont l'extrémité constitue le ou les connecteurs des terminaux IT situés dans la zone de couverture du PCA, ajouter ou enlever.

Selon une autre caractéristique intéressante de ce nouveau système de câblage, le répartiteur général comprend au moins un espace de lovage de trunk pour y ranger surplus de longueur de trunk. D'autre part, le contenant au format 19" du répartiteur intègre quatre racks exploitables au lieu de deux habituellement pour une superficie fonctionnelle occupée moindre, ce qui est également important dans le cadre du système de câblage de la présente invention, car il permet de réduire au minimum l'encombrement du contenant du répartiteur, et de ce fait la taille du local technique qui l'accueille.

Selon un autre aspect intéressant, le boitier DIN comprend un corps et au moins un plastron amovible formant des logements de réception pour des blocs de connexion optique ou de paires torsadées, le plastron étant avantageusement encliqueté de manière amovible sur le corps.

L'invention sera maintenant plus amplement décrite en référence aux dessins joints, donnant à titre d'exemple non limitatif, un mode de réalisation de l'invention.

Sur les figures :
La figure 1 est une vue très schématique du système de câblage selon l'invention,
La figure 2 est une vue schématique d'un PCA réalisé selon une forme de réalisation non limitative de l'invention,
La figure 3 est une vue schématique agrandie d'un détail du répartiteur général de l'invention,
La figure 4 est une vue en perspective schématique d'un faux plancher accueillant un caisson de l'invention,
La figure 5 est une vue en coupe transversale verticale à travers le PCA 7 de la figure 4, et
La figure 6 est une vue en perspective d'un boîtier de connectiques DIN utilisable dans un PCA.

Le système de câblage de la présente invention est destiné à être mis en oeuvre dans toute structure immobilière d'activités : tertiaires, hospitalières, pédagogiques, culturelles, sportives, de transport, touristiques, industriels, etc. ou résidentielle : habitat collectif, établissement d'accueil pour personnes, résidence universitaire, etc. Le système de câblage de l'invention peut être mis en oeuvre dès l'origine lors de la construction d'un bâtiment, ou encore lors de sa restauration ou remise en état.

Le système de câblage de l'invention comprend de manière très globale un répartiteur général 1 qui est installé dans un local technique du bâtiment à équiper. Bien entendu, ce local technique peut accueillir plus d'un répartiteur général si cela est nécessaire. Le répartiteur général 1 est relié à une pluralité de PCA 7 disposés dans les espaces d'exploitation des terminaux IT du bâtiment équipé, c'est-à-dire là où sont installés les périphériques ou terminaux d'utilisation, tels que des ordinateurs, des imprimantes, des photocopieurs, des caméras, des téléphones, des fax, etc. La proximité directe des PCA 7 avec les périphériques ou terminaux est une caractéristique essentielle de la présente invention. Ainsi, les périphériques ou terminaux pourront directement être raccordés à un PCA de proximité à l'aide de cordons, de prolongateurs ou de jarretières classiques. Les PCA 7 d'un même bâtiment peuvent être divisés en sous-ensemble de PCA, correspondant par exemple à un étage du bâtiment ou à une partie du bâtiment qui constitue une entité propre.

Les PCA 7 d'un sous-ensemble sont reliés entre eux par des trunks optiques 4 qui relient également un PCA 7 du sous-ensemble au répartiteur général 1. Les PCA 7 sont montés en série à l'aide des trunks optiques 4 qui peuvent avantageusement former un anneau optique refermé sur lui-même, offrant ainsi une redondance des liens et des parcours des trunks rattachant les PCA. Chaque infrastructure de câblage de base d'un sous-ensemble peut présenter une architecture qui lui est propre, l'anneau n'étant qu'un exemple de l'architecture pouvant être mise en oeuvre, l'architecture de chaque sous-ensemble est évolutive et peut revêtir n'importe quelle forme sans contrainte Ainsi, tous les PCA d'un sous-ensemble sont disposés sur une infrastructure de base de câblage formée par des trunks optiques 4. On peut par exemple utiliser un trunk optique comprenant douze fibres optiques. Chaque sous-ensemble peut être exploité indépendamment ou en étant associé à un, plusieurs ou tous les autres sous-ensembles, l'association ou la dissociation physique des sous-ensembles pouvant être réorganisée aisément et sans restriction.

Les différents PCA 7 d'un sous-ensemble peuvent également être reliés au répartiteur général 1 par une distribution à paires torsadées, constituée par des trunks de paires torsadées 5, 6. A la différence des trunks optiques 4 de l'infrastructure de base du câblage, les trunks de paires torsadées 6 relient les différents caissons 7 d'un sous-ensemble selon une architecture en étoile, comme on le verra ci-après plus en détail.

Les PCA 7 peuvent être logés dans des caissons et coffrets pour PCA, en faux plancher, en faux plafond, en apparent sur les murs et cloisons, en mobilier ou dans n'importe quel emplacement de réception dans l'espace d'exploitation. On verra ci-après une mise en oeuvre particulièrement avantageuse d'un caisson 7 dans un faux plancher de l'espace de travail d'une structure immobilière tertiaire.

Le contenant du répartiteur général 1 présente une conception originale qui est spécifique au système de câblage de l'invention. On peut ainsi subdiviser le contenant du répartiteur général 1 en plusieurs espaces ou compartiments dédiés 1a, 1 b, 1 c et 1 d qui ont chacun une fonction particulière. Le contenant du répartiteur général 1 comprend tout d'abord deux espaces ou compartiments 1 a doté de racks 19" 11 pour la réception de tiroirs optiques 12 ou de panneaux 19" pour paires torsadées 14, dédiés respectivement au câblage des opérateurs et aux trunks desservant les espaces d'exploitation de la structure immobilière. En dessous de cet espace ou compartiment 1 a, le contenant du répartiteur général 1 comprend deux espaces 1 b destinés à recevoir respectivement les équipements électroniques réseau de l'opérateur, tels que les modems et routeurs, les équipements électroniques centraux des réseaux locaux de la structure immobilière, tels que switch de coeur, firewall, contrôleur WiFi, etc.. En dessous de ces espaces d'équipements électroniques 1 b, le contenant du répartiteur général 1 comprend un espace serveur 1 c qui est séparé des espaces 1 b par un passe-cordon 17 qui est ajustable en hauteur. L'espace serveur 1 c est également pourvu d'un rack 19" qui s'étend perpendiculairement aux racks 19" des espaces supérieurs 1 a et 1 b. Pour accéder à l'espace serveur 1c, le contenant du répartiteur général comprend au moins une porte latérale 16. Le ou les serveur(s) peuvent s'étendre sur la totalité de la largeur du répartiteur général 1, ce qui est appréciable. Enfin, le contenant du répartiteur général 1 comprend un ou plusieurs lyre(s) de lovage 1 d qui sont disposés sur la périphérie externe. Deux espaces de lovage latéraux 1 d peuvent par exemple être prévus de part et d'autre des espaces ou compartiments 1 a et 1 b. Un autre espace de lovage peut être disposé à l'arrière du contenant du répartiteur général. Ces espaces de lovage 1 d permettent de recevoir une certaine longueur de câbles ou de trunks, par exemple de cinq à dix mètres de longueur, au cas où l'installation d'un autre répartiteur général serait nécessaire, suite à la demande de dissociation physique de l'infrastructure de câblage d'un ou plusieurs sous-ensemble(s) de PCA desservant des espaces d'exploitation de la structure immobilière, lorsqu'ils doivent être occupés par des exploitants distincts.

Par rapport au contenant d'un répartiteur général classique, le contenant du répartiteur général 1 de l' invention présente une architecture particulièrement compacte permettant d'accueillir à la fois les équipements de câblage des opérateurs et ceux distribuant les espaces d'exploitation de la structure immobilière, les équipements électroniques des réseaux des opérateurs et des réseaux locaux de la structure immobilière, ainsi que les équipements centraux et serveurs des systèmes IT de la structure immobilière ce qui permet de réduire considérablement la superficie du local technique. Ceci est appréciable notamment dans des villes où le m² est très onéreux.

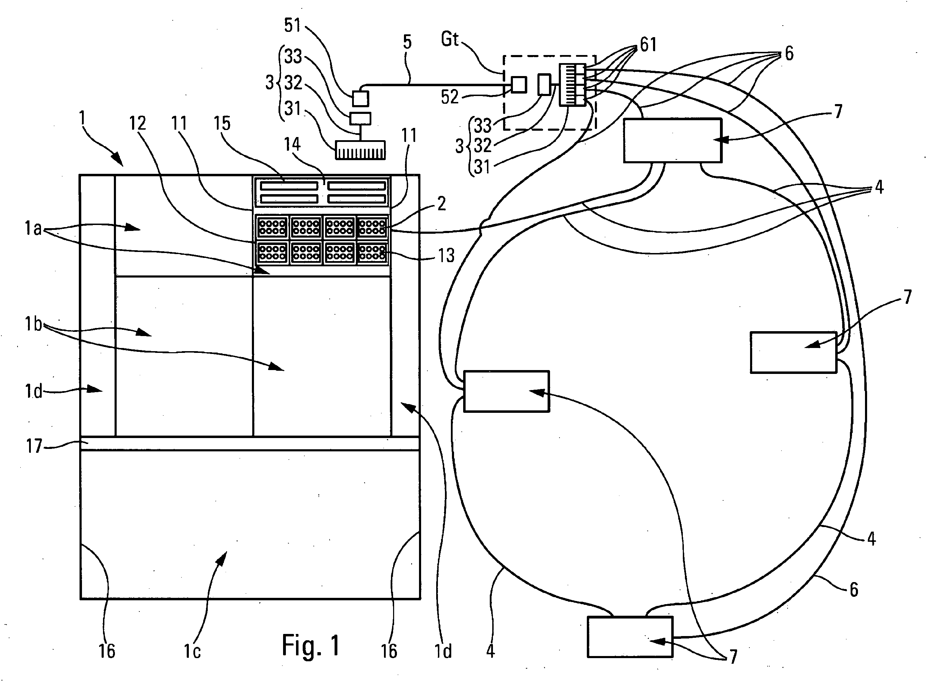

L'espace ou compartiment 1 a dédié à la distribution des espaces d'exploitation de la structure immobilière est le plus important en ce qui concerne la présente invention, étant donné que les caissons 7 sont raccordés par les trunks 4 et 5 à la connectique installée dans l'espace ou compartiment 1 a. Pour des raisons de simplicité et de clarté, la figure 1 ne représente qu'un seul tiroir optique 12 et un seul panneau 19" 14, qui est optionnel dans le cadre de la présente invention.

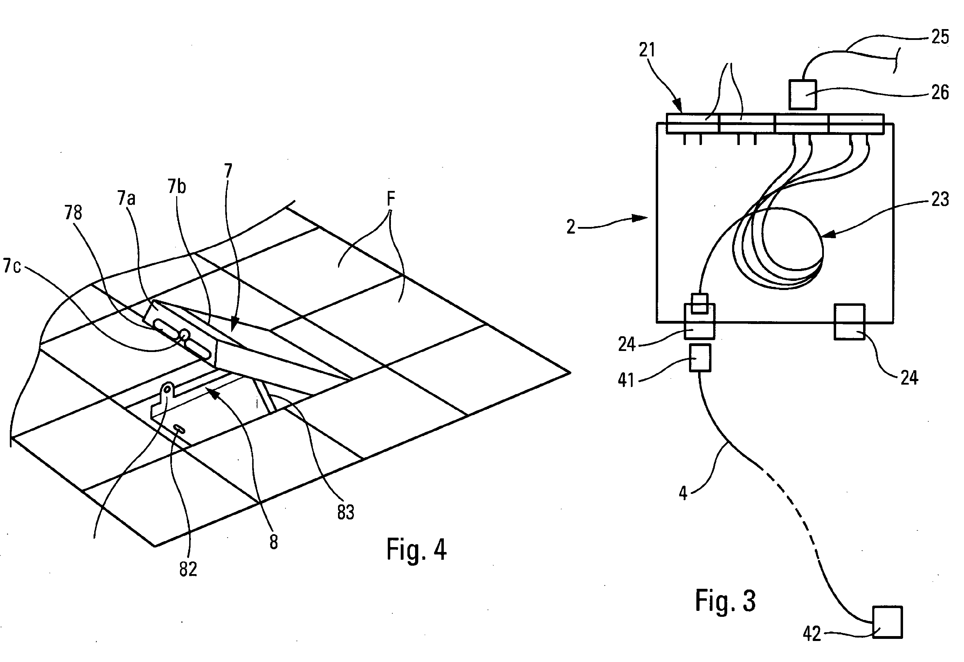

Le tiroir optique 12, qui est conçu pour être reçu dans le rack 19" 11, comprend de manière conventionnelle des logements 13 destinés à la réception de cassettes optiques 2. En se référant à la figure 3, on peut voir de manière fortement agrandie la structure schématique d'une cassette optique 2 utilisée dans le cadre de la présente invention. Il s'agit d'un modèle tout à fait classique qui est disponible dans le commerce. La cassette optique 2 comprend sur sa face arrière un ou plusieurs connecteur(s) optique(s) de type MPO ou MTP par exemple. Sur sa face avant, la cassette optique 2 comprend six ou douze corps de traversée duplex ou quad LC 21 pour douze ou vingt- quatre fibres optiques. Une jarretière optique de type LC-DUPLEX (deux fibres optiques) 25 peut être raccordée au moyen d'un connecteur LC 26 au corps de traverse 21. A l'intérieur de la cassette optique 2 se trouve un épanouisseur (fan out) 23 qui relie les connecteurs 24 au corps de traverse 21. Le trunk optique 4 est raccordé aux connecteurs 24 au moyen d'un connecteur correspondant 41 de type MPO ou MTP préconnecté à son extrémité. A son autre extrémité, le trunk optique 4 comprend un connecteur 42 du même type qui est raccordé à un PCA 7.

Le panneau 19" pour paires torsadées 14 est conçu pour être reçu dans le rack 19" 11 du contenant du répartiteur général 1. Ce panneau 19" 14 comprend ici quatre logements de réception 15 disposés côte à côte. Il s'agit là d'une architecture originale dans le cadre de la présente invention. Chaque logement de réception 15 reçoit un connecteur 31 de type module 110, préconnecté sur un demi-cordon RJ21 à vingt-cinq paires torsadées. Selon une caractéristique intéressante de la présente invention, ce connecteur module 110 31 est relié par un cordon de paires torsadées 32 à un connecteur 33 de type RJ21. Les deux connecteurs 31 et 33 reliés ensemble par le cordon 32 constituent un ensemble de connexion pré-assemblé module/connecteur RJ21 3 qui est assemblé en usine ou en atelier. De cette manière, le câblage en paires torsadées du répartiteur général est extrêmement rapide et aisé, du fait qu'il suffit de monter le panneau 19" 14 dans le rack 19" 11 et d'insérer le module 110 31 dans son logement de réception respectif 15. Le trunk de paires torsadées 5, qui comprend vingt-cinq paires torsadées, est raccordé au connecteur RJ21 33 par un connecteur RJ21 complémentaire 51. A son autre extrémité, le trunk de paires torsadées 5 comprend également un connecteur RJ21 52. Selon l'invention, un autre ensemble de connexion pré-assemblé module 110/connecteur RJ21 3, qui est installé dans une gaine technique Gt ou un autre emplacement dans l'espace d'exploitation de la structure immobilière reçoit le connecteur RJ21 du trunk de paires torsadées 5. Cet ensemble de connexion pré-assemblé peut être strictement identique à l'ensemble de connexion pré-assemblé 3 qui vient d'être décrit. En effet, il comprend un module 110 31 raccordé à un connecteur RJ21 33 par une courte section de câble 32. Le module 110 31 est ensuite relié aux différents PCA 7 d'un sous-ensemble de caissons par des trunks de paires torsadées 6 qui s'étendent selon un plan en étoile, de sorte que chaque caisson 7 est relié au module 110 31 par au moins un trunk de paires torsadées respectif 6. Au point de vue connectique, ces trunks de paires torsadées 6, qui peuvent comprendre par exemple quatre paires torsadées, sont équipés en amont de connecteurs de type 110 C4 à quatre paires 61 et en aval de connecteurs de type RJ45 installés dans un des contenants des PCA 7.

Il faut noter que le réseau de câbles est uniquement constitué de trunks optiques 4 et/ou de paires torsadées 5, 6 qui est particulièrement économique en termes de longueur de câbles. En effet, le répartiteur général 1 est relié au premier caisson 7 par un seul trunk optique 4 qui se prolonge ensuite pour relier en série tous les autres caissons 7 d'un sous-ensemble de caissons. Il en est de même pour le trunk de paires torsadées 5 qui relie le répartiteur général 1 à la gaine technique Gt ou un autre emplacement dans l'espace d'exploitation de la structure immobilière. Ensuite, les trunks de paires torsadées 6 de faible longueur relient en étoile de manière classique les différents caissons 7 du sous-ensemble de caissons. Du fait de la faible longueur de câblage, et de l'utilisation d'un trunk optique principal 5, la quantité de cuivre est fortement réduite. D'autre part, il faut également noter que la mise en oeuvre de ce système de câblage est extrêmement rapide, du fait de l'utilisation d'un trunk optique unique 4 et de trunk de paires torsadées 5, 6 qui sont déjà équipés de connecteurs et surtout du fait de l'utilisation d'ensembles de connexion pré-assemblés module 110/connecteur RJ21 3.

Le PCA 7 constitue un élément particulièrement important de la présente invention. Il est relié en amont au répartiteur général 1 par les trunks 4, 5 et 6, et est relié en aval aux différents périphériques ou terminaux par de simples cordons ou prolongateurs à paires torsadées ou bretelles optiques et/ou. Comme préalablement mentionné, les PCA 7 sont installés dans l'espace d'exploitation à proximité directe des périphériques et/ou terminaux, de sorte que les longueurs des cordons, prolongateurs et bretelles de raccordement sont extrêmement courtes. Les PCA 7 peuvent être installés dans un faux plancher F comme visible sur la figure 4, ou encore dans un faux plafond ou dans n'importe quelle structure de réception prévue dans l'espace d'exploitation. Le PCA 7 comprend un caisson 70, de préférence métallique, définissant un espace intérieur recevant divers équipements électroniques, de connectique et d'alimentation. Le PCA 7 comprend un ou plusieurs switch(s) durci(s) 77 au format 19" ou DIN, modulaire(s) ou non, par exemple. Le switch d'accès durci également dénommé industriel 77 se caractérise par rapport à un switch d'accès bureautique courant par le support de protocoles de résilience réseau publics (par exemple de type MRP) et propriétaires exploitant le caractère nativement redondant de l'architecture en anneau et offrant des délais de cicatrisation réseau inférieurs à 300 millisecondes en cas d'interruption d'une liaison aboutissant sur un des switches durcis supportant le réseau d'accès IP, ce qui répond aux besoins des services réseau temps réel comme la téléphonie qui requièrent une latence réseau inférieure à 500 millisecondes sous peine de perdre la communication en cours. Ce délai maximal de cicatrisation est garanti par tous les constructeurs de switches durcis, jusqu'à concurrence d'au moins cinquante switches implémentés sur un même anneau. Le délai de commutation du switch industriel est identique quelque soit le niveau de charge du réseau, celui-ci n'a donc pas d'impact sur la latence et la disponibilité du réseau d'accès. En outre, la plupart des switches industriels sont dépourvus de ventilateur et sont conçus pour fonctionner dans des conditions plus ou moins difficiles, ils offrent des plages de températures fonctionnelles supérieures aux switches bureautiques classiques et des niveaux de protection IP variés suivant le modèle retenu , d'où une capacité à s'intégrer dans n'importe quel environnement fonctionnel sans nécessiter pour cela un système de ventilation ou de climatisation une consommation électrique réduite, une fiabilité et une pérennité accrues. Un switch d'accès bureautique courant supporte à l'inverse des protocoles publics de résilience, par exemple de type RSTP, ne permettant pas la cicatrisation du réseau d'accès en moins d'une seconde au minimum, le rendant inapte à répondre aux contraintes de continuité de services imposées par les systèmes IT temps réel comme les systèmes voix et vidéo. De plus, le switch bureautique intègre un ventilateur, générateur de bruit et de consommation électrique et requiert un contrôle de son environnement fonctionnel imposant l'exploitation de systèmes de ventilation et de climatisation. La mise en oeuvre d'un switch industriel dans un environnement autre qu'industriel est une caractéristique d'application nouvelle qui procure de nombreux avantages au système de câblage de l'invention. Le switch industriel modulaire 77 comprend des logements ou des connecteurs de réception aptes à recevoir différents modèles de module de réseau fibre optique et/ou RJ45. Ces modules réseau comprennent des ports de sortie fibre optique ou RJ45 772. Le switch industriel 77 comprend également des connecteurs d'entrée et de sortie 773 pour des jarretières optiques 91 équipées par exemple de connecteurs de type LC 92 et 93 à chacune de leurs extrémités. Des cordons, prolongateurs ou bretelles optiques et/ou RJ45 97 sont enfichés dans les ports de sortie fibre optique et/ou RJ45 772 du module réseau 771 à l'aide de connecteurs appropriés 98 de type fibre optique et/ou RJ45 respectifs. Ces cordons, prolongateurs ou jarretières 97 sont équipés de connecteurs fibre optique et/ou RJ45 99 destinés à raccorder directement les divers périphériques et/ou terminaux installés dans l'espace d'exploitation couvert par le PCA 7.

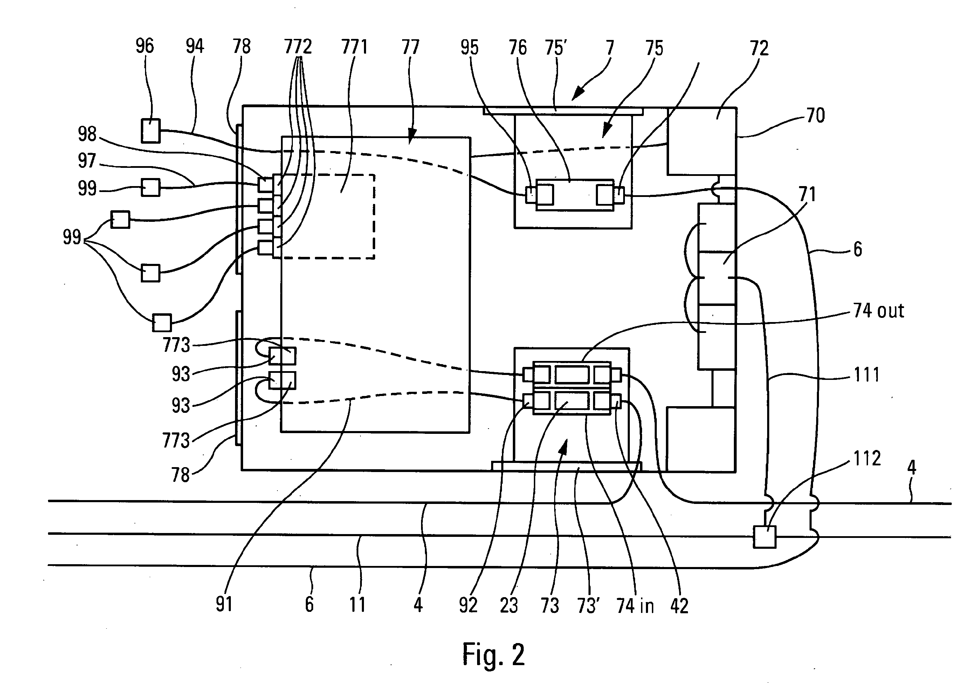

Le PCA 7 comprend également un ou plusieurs boîtier(s) DIN 73 75 destiné(s) à la réception de blocs de connexion de type fibre optique et/ou paires torsadées. On peut par exemple prévoir deux boîtiers DIN 73, 75 reçus chacun sur un rail DIN respectif 73', 75'. Un boîtier DIN 73 peut par exemple recevoir un bloc de connexion optique d'entrée 74 in et un bloc de connexion optique de sortie 74 out. Ces blocs de connexion optique 74 in et 74 out peuvent présenter une structure similaire ou identique à la cassette optique représentée sur la figure 2. Dans une version épurée, les blocs de connexion optiques 74 in et 74 out peuvent être dépourvus d'épànouisseurs, de sorte que le trunk optique 4, équipé de connecteurs LC, SC ou ST, est directement raccordé au corps de traverse 21 de la cassette 2. Dans la version avec épanouisseur, le trunk optique 4 comprend des connecteurs optiques de type MPO ou MTP 42 qui sont raccordés aux blocs de connexion optiques 74 in et 74 out. A la sortie de ces blocs, les jarretières 91 équipées de connecteurs LC par exemple permettent de relier le switch industriel 77. L'autre boîtier de connectiques 75 peut recevoir un trunk de paires torsadées 76 pourvu de plusieurs connecteurs RJ45. A la sortie du boîtier de connectiques 75, un cordon ou prolongateur 94 comprenant quatre paires torsadées est relié à l'aide d'un connecteur de type RJ45 95. Le connecteur RJ45 96 d'extrémité peut être directement relié à un périphérique, tel qu'un téléphone, un fax ou un terminal vidéo. Les divers cordons, prolongateurs et bretelles sortent du caisson 70 du PCA 7 à travers un ou deux passe-balais 78. Le boîtier de connectiques 75 et un des connecteurs RJ45 du trunk 76 peuvent également être utilisés pour recevoir le plug RJ45 du contact sec contrôlant l'ouverture du contenant du PCA, quand une sécurisation accrue du contrôle d'accès au PCA est requise. On peut également exploiter un des connecteurs RJ45 du trunk 76, pour acheminer un signal de retour vers le répartiteur général 1, ce signal de retour informant par exemple de l'état de l'environnement d'un PCA 7, comme par exemple de la température ou de la présence d'eau dans son environnement proche. Le boîtier de connectiques 75 présente la particularité de disposer d'une variété de plastrons avant amovibles recevant les connecteurs RJ45 du trunk 76, permettant de l'adapter au mode de fixation retenu par les fabricants pour leurs connecteurs RJ45, ainsi qu'au type de connecteurs fibres ou paires torsadées du trunk, rendant ainsi le boîtier de connectiques 75 constructeur agnostique, préservant en conséquence le caractère ouvert du nouveau système de câblage et lui conférant un caractère universel du fait qu'un boitier de connectique identique pourra être utilisé pour recevoir les connecteurs optiques ou paires torsadées des trunks quels que soient leur type MPO, MTP, LC, SC, ST ou RJ45 et leur constructeur. Dans le cas d'un trunk à connectique MPO ou MTP, le boîtier de connectique est pourvu en option d'un ou deux épanouisseurs et corps de traversée MPO ou MTP.

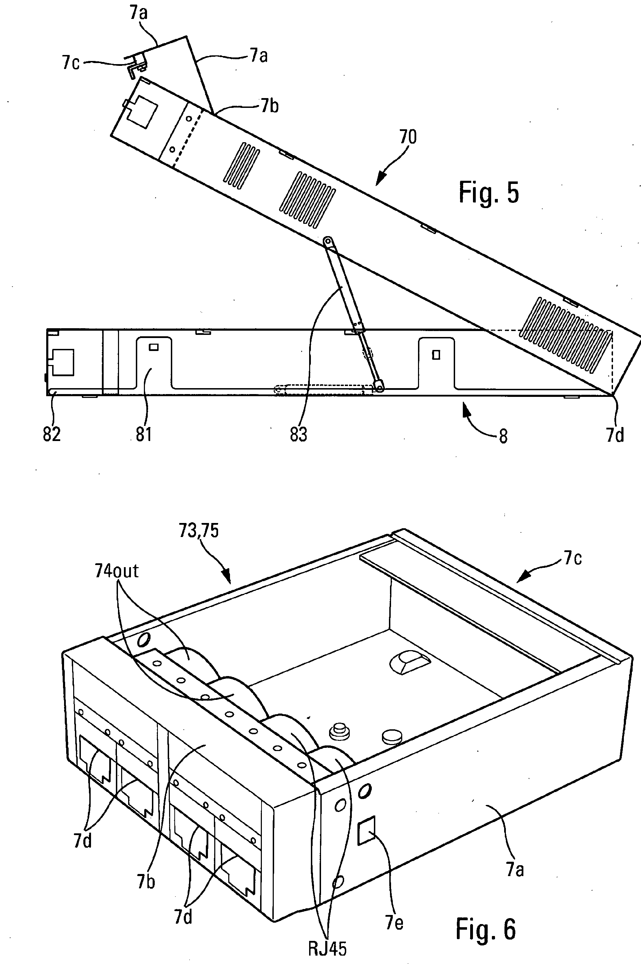

La figure 6 montre un boitier DIN 73 ou 75 comprenant un corps 7a en forme de goulotte en U dans les deux extrémités opposées sont obturées par un plastron, à savoir un plastron avant 7b et un plastron arrière 7c sont encliquetés sur le corps 7a de manière amovible. Le plastron avant 7b peut par exemple comprendre deux pattes souples d'encliquetage 7e qui viennent en prise amovible dans les fenêtres pratiquées dans le corps 7a. Le plastron avant 7b comprend plusieurs logements de réception 7d pour des blocs de connexion de type fibre optique et/ou paires torsadées. On peut par exemple concevoir plusieurs modèles différents de plastron amovibles avec des logements de réception 7d adaptés aux différents types de connecteurs, de manière à conférer au boitier DIN une modularité universelle. Il en est de même pour le plastron arrière 7c qui peut accueillir des blocs de connexion optique. Le corps 7a du boitier peur accueillir un ou plusieurs épanouisseurs (non représentés).

Enfin, pour l'alimentation électrique du switch 77, il peut être prévu soit une alimentation en courant continu 72, par exemple de 48 volts, qui relie en aval le switch industriel 77 et qui relie en amont une bloc d'alimentation protégé par un disjoncteur 71 reliée par un câble de liaison amovible 111 à un bus électrique souple 11 au moyen d'un connecteur 112 de type CAD (contact auto dénudant), soit une connexion directe du switch 77 sur le bloc d'alimentation 71, soit deux connexions parallèles du switch 77, une sur le bloc d'alimentation 71 et l'autre sur l'alimentation en courant continu 72 Le bus électrique flexible 11 peut s'étendre à côté du trunk optique 4, du fait de sa grande flexibilité. A la demande le circuit d'alimentation peut être intégralement redondé, en doublant le bus électrique flexible 11, le bloc d'alimentation 71 et si nécessaire l'alimentation en courant continu 72 et en employant des switches industriels équipés de deux circuits d'alimentation redondants.

Il est à noter que tous les composants qui équipent le PCA 7 sont de type conventionnel ou universel, et de ce fait très largement répandus dans le commerce. D'autre part, il est très facile d'intervenir sur le PCA pour en modifier ses fonctionnalités et capacités en remplaçant par exemple le module réseau 771 du switch industriel 77 et en remplaçant et/ou complétant les connectiques qui équipent les boîtier de connectiques 73 et 75. Les cordons, prolongateurs et bretelles de sortie 94 et 97 seront remplacés ou complétés en conséquence. Cela confère une très grande modularité et capacité d'adaptation du PCA 7, avec un temps d'intervention et une technicité très réduits.

Lorsque les PCA 7 sont installés sur un réseau en anneau qui peut être créé sur le système de câblage quelle que soit son architecture en anneau, en bus, en arbre ou autre, suivant les jarretièrages réalisés dans les PCA sur les différentes fibres disponibles des trunks, un ou plusieurs des PCA peuvent faire office de pont de rattachement de l'anneau réseau au(x) switch(es) de coeur disposé(s) dans le(s) répartiteur(s) général(aux) 1, si l'on souhaite adopter un protocole de résilience réseau distinct sur l'anneau et sur le segment du réseau qui le rattache au(x) switch(es) de coeur, afin de bénéficier des services d'un protocole de résilience propriétaire ultra-rapide sur l'anneau permettant une cicatrisation de l'anneau réseau dans un délai inférieur à 50 millisecondes, pour les services IT requérant un très haut niveau de disponibilité du réseau. Dans le cas de l'utilisation de switch(es) de coeur de type industriel, ce(s) dernier(s) peuvent être directement intégré(s) au(x) anneau(x) des réseaux d'accès IP sans qu'il soit nécessaire d'intégrer un switch de pont dans un PCA de pont. La seule caractéristique distinguant un switch disposé dans un PCA de pont, de celui disposé dans les autres PCA disposés constituant l'infrastructure de base du système de câblage, est constituée par le nombre minimal de ports uplink de backbone réseau qu'ils doivent offrir, qui est de trois au lieu de deux pour les autres switches d'accès.

On se référera maintenant aux figures 4 et 5 pour décrire de manière très générale la mise en oeuvre du caisson 70 d'un PCA 7 dans un faux plancher F. Le caisson 70 du PCA 7 peut par exemple être reçu dans un châssis fixe 8 qui est posé sur la structure du faux plancher à la place des plaques de faux plancher dont le nombre sera en rapport avec les dimensions du châssis à intégrer. Le caisson 70 du PCA 7 est pourvu latéralement de pattes de fixation permettant de le suspendre au châssis 8 offrant sur ses faces latérales internes des dispositifs d'accrochage, permettant l'installation du caisson du PCA 7 à différents emplacements sur le châssis 8. Le châssis fixe 8 est pourvu de deux volets de fermeture montés sur des charnières fixées sur le châssis, constitués du même matériau que les plaques du faux plancher et de la même épaisseur, un dispositif de réglage intégré aux volets, permet d'ajuster leur hauteur par rapport au faux plancher environnant. Un outil spécifiquement développé permet de saisir une languette disposé sous la face interne d'un des volets, permettant ainsi son ouverture articulée sur sa charnière. Le caisson 70 du PCA 7 est constitué d'une partie fixe qui est suspendu au châssis 8 et d'une partie mobile fixée sur un axe 7d à l'arrière de la partie fixe et sur un vérin 83, dont une extrémité est fixée sur la partie fixe du caisson suspendue au châssis 8 et l'autre extrémité sur la partie mobile du caisson. Le caisson 70 comprend également un élément de verrouillage 82 lorsqu'il est en position intégrée dans le plancher, permettant de verrouiller la partie mobile du caisson sur sa partie fixe. Le déverrouillage du caisson 70 provoque la détente du vérin 83 qui sollicite le caisson 70 dans une position inclinée extraite, comme représenté sur la figure 4. Le vérin 83 est maintenu contraint dans sa position rétractée lorsque le caisson 70 est verrouillé dans sa position intégrée sur l'élément de verrouillage 82 de la partie fixe du caisson suspendue au châssis 8. Avantageusement, le caisson 70 comprend une face latérale d'entrée 7a au niveau de laquelle les passe-balais 78 sont prévus. Cette face latérale d'entrée forme avantageusement un couvercle qui est articulé le long d'une charnière 7b. Un système de verrouillage 7c de type serrure permet de verrouiller le couvercle en position fermée ainsi que de verrouiller le caisson 70 en position intégrée par coopération avec l'élément de verrouillage 82 de la partie fixe du caisson 70 suspendue au châssis 8. Ainsi, l'opérateur qui doit intervenir sur le caisson 7 commence par ouvrir les volets du châssis 8 pour accéder au caisson 70. Il déverrouille ensuite le système de verrouillage 7c qui permet l'ouverture du couvercle 7a et l'extraction du caisson 70 dans la position accessible représentée sur la figure 4, grâce à l'action du vérin 83. On comprend alors plus facilement que le PCA est un élément primordial de la présente invention, qui permet de se passer d'un sous-répartiteur classique installé dans un local technique dédié, lorsque les espaces d'exploitation des terminaux IT sont équipés d'un faux plancher, comme le permettent les autres produits contenants de PCA développés dans le cadre de cette invention, comme les caissons fixes qui permettent une intégration des PCA en faux plafond ou en apparent sur un mur ou cloison ou comme les coffrets pour PCA DIN qui permettent une intégration des PCA en gaine et espace technique, en faux plafond et en mobilier. Au contraire, le PCA 7 est directement intégré dans l'espace d'exploitation à proximité des périphériques qu'il doit desservir.

Le système de câblage de la présente invention permet de satisfaire de nombreuses exigences, comme par exemple :
- répondre aux besoins de la convergence à IP tout en préservant le support des réseaux traditionnels de téléphonie, vidéo, TV, etc.,
- conférer toute la flexibilité d'exploitation souhaitée au réseau IT,
- réduire les coûts d'installation et d'exploitation (déménagement, nouvel utilisateur) des réseaux IT,
- réduire la consommation énergétique des réseaux IT,
- abaisser l'empreinte carbone liée aux réseaux IT,
- faciliter et accélérer le déploiement et l'exploitation des réseaux IT.

Le système de câblage de l'invention est un modèle ouvert basé sur les standards publics, les composants courants des constructeurs et des solutions techniques éprouvés, comme par exemple la préfabrication et Ethernet.

Le système de câblage de la présente invention permet de supprimer les sous-répartiteurs et la distribution horizontale en étoile.

Grâce à l'invention, on peut mettre en oeuvre un système de câblage qui sort du schéma traditionnel quasi universel particulièrement coûteux en cuivre et consommateur en énergie.

## Revendications

1. Système de câblage de locaux de structure immobilière, notamment à usage tertiaire, comprenant :
- un répartiteur général (1) installé dans un local technique, le répartiteur général (1) comprenant au moins un tiroir optique (12) pour la réception de cassettes optiques (13),
- au moins un trunk optique (4) connecté à une cassette optique (13) du répartiteur général (1) et s'étendant dans un espace d'exploitation,
- au moins un câble d'alimentation (11) en moyenne tension qui suit le trunk optique (4),
- au moins un PCA (7) installé dans l'espace d'exploitation et raccordé au trunk optique (4), **caractérisé en ce que** le PCA contient au moins :
- au moins un switch industriel (77) au format DIN ou 19",
- au moins une alimentation (72) pour le switch industriel (77) relié au câble d'alimentation (11),
- au moins un boitier DIN (73, 75) pourvu de blocs de connexion optiques (74in, 74out) auxquels est raccordé le trunk optique (4),
- au moins un rail DIN (73', 75') pour le montage du boitier DIN (73, 75),
- des jarretières optiques (91) reliant les blocs de connexion optiques (74in, 74out) au switch industriel (77),
- des cordons et/ou prolongateurs RJ45 et/ou bretelles optiques (97) issues du caisson (7) et raccordées aux périphériques installées dans l'espace d'exploitation.

2. Système de câblage selon la revendication 1, comprenant plusieurs PCA (7) montés en série sur le trunk optique (4).

3. Système de câblage selon la revendication 2, dans lequel le trunk optique (4) forme un anneau optique sur lequel les PCA (7) sont montés en série.

4. Système de câblage selon la revendication 2 ou 3, dans lequel un des PCA (7) de l'anneau constitue un PCA de pont qui est relié au répartiteur général (1) par le trunk optique (4).

5. Système de câblage selon l'une quelconque des revendications précédentes, dans lequel le câble d'alimentation (11) est un bus électrique flexible, le PCA (7) étant relié au bus électrique par un cordon électrique (111) équipé d'un connecteur par contact auto-dénudant (112) en prise avec le bus électrique.

6. Système de câblage selon l'une quelconque des revendications précédentes, comprenant en outre au moins un trunk de paires torsadées (5) raccordé au répartiteur général (1) qui est équipé d'un ensemble de connexion pré-assemblé (3) comprenant un module 110 (31) relié à un connecteur RJ21 (33), le module 110 (31) étant reçu dans un panneau 19" (14) monté sur un rack 19" (11) du répartiteur général (1), le trunk de paires torsadées (5) reliant le connecteur RJ21 (33) à un autre ensemble de connexion pré-assemblé module 110/connecteur RJ21 (3) installé dans une gaine technique (Gt), au moins un trunk de paires torsadées (6) reliant l'ensemble de connexion (3) à au moins un connecteur RJ45 d'un boitier DIN (75) du caisson (7).

7. Système de câblage selon la revendication 6, dans lequel l'ensemble de connexion pré-assemblé module 110/connecteur RJ21 (3) installé dans la gaine technique (Gt) relie en étoile les différents caissons (7) au moyen de trunks de 4 paires torsadées respectifs (6).

8. Système de câblage selon l'une quelconque des revendications précédentes, dans lequel le PCA (7) comprend un caisson (70) reçu dans un châssis fixe (8) apte à être logé dans un faux plancher (F), le caisson (70) pivotant autour d'un axe horizontal à partir d'une position intégrée de manière à exposer une face latérale d'entrée (7a) du caisson (70) dans une position extraite.

9. Système de câblage selon la revendication 8, dans lequel le caisson (70) du PCA (7) est sollicité par un vérin (83) dans la position extraite, la face latérale d'entrée (7a) formant avantageusement un couvercle muni d'un système de verrouillage (7c) qui permet de verrouiller à la fois le couvercle en position fermée et le caisson en position intégrée.

10. Système de câblage selon l'une quelconque des revendications précédentes, dans lequel le PCA comprend un coffret adapté à l'intégration de composants exclusivement au format DIN, apte à se loger en gaine technique et en mobilier.

11. Système de câblage selon l'une quelconque des revendications précédentes, dans lequel le répartiteur général (1) comprend au moins un espace de lovage de trunk (1d) pour y ranger surplus de longueur de trunk.

12. Système de câblage selon l'une quelconque des revendications précédentes, dans lequel le répartiteur général (1) comprend au moins une porte d'accès latérale (16) donnant accès à un espace de réception (1c) muni d'un rack 19".

13. Système de câblage selon l'une quelconque des revendications précédentes, dans lequel le boitier DIN (73, 75) comprend un corps (7a) et au moins un plastron amovible (7b, 7c) formant des logements de réception (7d) pour des blocs de connexion optique ou de paires torsadées, le plastron (7b, 7c) étant avantageusement encliqueté de manière amovible sur le corps (7a).

## Patentansprüche

1. System zum Verdrahten von Räumen mit Immobilienstruktur vor allem für gewerbliche Nutzung, das Folgendes umfasst:
- einen allgemeinen Verteiler (1), der in einem Technikraum installiert ist, wobei der allgemeine Verteiler (1) wenigstens einen optischen Einschub (12) für die Aufnahme optischer Kassetten (13) enthält,
- wenigstens eine optische Verbindungsleitung (4), die mit einer optischen Kassette (13) des allgemeinen Verteilers (1) verbunden ist und in einem Betriebsraum verläuft,
- wenigstens ein Mittelspannungs-Versorgungskabel (11), das der optischen Verbindungsleitung (4) folgt,
- wenigstens einen PCA (7), der in dem Betriebsraum installiert ist und mit der optischen Verbindungsleitung (4) verbunden ist, **dadurch gekennzeichnet, dass** der PCA wenigstens Folgendes enthält:
- wenigstens einen Industrieschalter (77) mit DIN- oder 19"-Format,
- wenigstens eine Versorgung (72) für den Industrieschalter (77), die mit dem Versorgungskabel (11) verbunden ist,
- wenigstens ein DIN-Gehäuse (73, 75), das mit optischen Verbindungsblöcken (74in, 74out) versehen ist, mit denen die optische Verbindungsleitung (4) verbunden ist,
- wenigstens eine DIN-Schiene (73', 75') für die Montage des DIN-Gehäuses (73, 75),
- optische Verteilerdrähte (91), die die optischen Verbindungsblöcke (74in, 74out) mit dem Industrieschalter (77) verbinden,
- RJ45-Litzen und/oder -Verlängerer und/oder optische Weichen (97), die von dem Behälter (7) ausgehen und mit den Peripheriegeräten verbunden sind, die in dem Betriebsraum installiert sind.

2. Verdrahtungssystem nach Anspruch 1, das mehrere PCA (7) umfasst, die in der optischen Verbindungsleitung (4) in Reihe montiert sind.

3. Verdrahtungssystem nach Anspruch 2, wobei die optische Verbindungsleitung (4) einen optischen Ring bildet, in dem die PCA (7) in Reihe montiert sind.

4. Verdrahtungssystem nach Anspruch 2 oder 3, wobei einer der PCA (7) des Rings einen Brücken-PCA bildet, der über die optische Verbindungsleitung (4) mit dem allgemeinen Verteiler (1) verbunden ist.

5. Verdrahtungssystem nach einem der vorhergehenden Ansprüche, wobei das Versorgungskabel (11) ein biegsamer elektrischer Bus ist, wobei der PCA (7) mit dem elektrischen Bus durch eine elektrische Litze (111) verbunden ist, die durch selbstabisolierenden Kontakt (112) mit einem Verbinder ausgerüstet ist, der mit dem elektrischen Bus in Eingriff ist.

6. Verdrahtungssystem nach einem der vorhergehenden Ansprüche, das außerdem wenigstens eine Verbindungsleitung (5) aus verdrillten Paaren umfasst, die mit dem allgemeinen Verteiler (1) verbunden ist und mit einer vormontierten Verbindungsgesamtheit (3) ausgerüstet ist, die ein Modul 110 (31) enthält, das mit einem RJ21-Verbinder (33) verbunden ist, wobei das Modul 110 (31) in einem 19"-Board (14) aufgenommen ist, das in einem 19"-Gestell (11) des allgemeinen Verteilers (1) montiert ist, wobei die Verbindungsleitung (5) aus verdrillten Paaren den RJ21-Verbinder (33) mit einer anderen vormontierten Verbindungsgesamtheit aus Modul 110/Verbinder RJ21 (3), die in einer technischen Abschirmung (Gt) installiert ist, verbindet, wobei wenigstens eine Verbindungsleitung (6) verdrillter Paare die Verbindungsgesamtheit (3) mit wenigstens einem RJ45-Verbinder eines DIN-Gehäuses (75) des Behälters (7) verbindet.

7. Verdrahtungssystem nach Anspruch 6, wobei die vormontierte Verbindungsgesamtheit aus Modul 110/Verbinder RJ21 (3), die in der technischen Abschirmung (Gt) installiert ist, die verschiedenen Behälter (7) mittels Verbindungsleitungen aus vier jeweils verdrillten Paaren (6) sternförmig verbindet.

8. Verdrahtungssystem nach einem der vorhergehenden Ansprüche, wobei der PCA (7) einen Behälter (70) umfasst, der in einem festen Rahmen (8) aufgenommen ist, der in einem doppelten Boden (F) untergebracht ist, wobei der Behälter (70) ausgehend von einer integrierten Position um eine horizontale Achse schwenkt, derart, dass eine seitliche Eingangsfläche (7a) des Behälters (70) in einer extrahierten Position freiliegt.

9. Verdrahtungssystem nach Anspruch 8, wobei der Behälter (70) des PCA (7) durch einen Schubzylinder (83) in die extrahierte Position vorbelastet ist, wobei die seitliche Eingangsfläche (7a) vorteilhafte einen Deckel bildet, der mit einem Verriegelungssystem (7c) versehen ist, das ermöglicht, zugleich den Deckel in der geschlossenen Position und den Behälter in der integrierten Position zu verriegeln.

10. Verdrahtungssystem nach einem der vorhergehenden Ansprüche, wobei die PCA einen Kasten umfasst, der an die Integration von Komponenten ausschließlich im DIN-Format angepasst ist und in einer technischen Abschirmung und in einer Möblierung untergebracht werden kann.

11. Verdrahtungssystem nach einem der vorhergehenden Ansprüche, wobei der allgemeine Verteiler (1) wenigstens einen Verbindungsleitungsaufnahmeraum (1d) umfasst, um darin eine überschüssige Länge der Verbindungsleitung unterzubringen.

12. Verdrahtungssystem nach einem der vorhergehenden Ansprüche, wobei der allgemeine Verteiler (1) wenigstens eine seitliche Zugangstür (16) umfasst, die einen Zugang zu einem Aufnahmeraum (1c), der mit einem 19"-Gestell versehen ist, bietet.

13. Verdrahtungssystem nach einem der vorhergehenden Ansprüche, wobei das DIN-Gehäuse (73, 75) einen Körper (7a) und wenigstens eine abnehmbare Haube (7b, 7c), die Aufnahmeräume (7d) für die optischen Verbindungsblöcke oder die verdrillten Paare bildet, umfasst, wobei die Haube (7b, 7c) vorteilhaft lösbar an dem Körper (7a) eingerastet ist.

## Claims

1. Wiring system for building structure premises, in particular for use in the tertiary sector, comprising:
- a main distribution frame (1) installed in an equipment room, the main distribution frame (1) comprising at least one optical drawer (12) for receiving optical cassettes (13),
- at least one optical trunk cable (4) connected to an optical cassette (13) of the main distribution frame (1) and extending into an operating space,
- at least one medium-voltage power cable (11) which follows the optical trunk cable (4),
- at least one ACP (7) installed in the operating space and connected to the optical trunk cable (4), **characterized in that** the ACP contains at least:
- at least one DIN- or 19"-format industrial switch (77),
- at least one power supply (72) for the industrial switch (77) linked to the power cable (11),
- at least one DIN box (73, 75) provided with optical connection blocks (74in, 74out) to which the optical trunk cable (4) is connected,
- at least one DIN rail (73', 75') for mounting the DIN box (73, 75),
- optical cross-connection wires (91) linking the optical connection blocks (74in, 74out) to the industrial switch (77),
- RJ45 leads and/or extensions and/or optical jumpers (97) originating from the box (7) and connected to the peripherals installed in the operating space.

2. Wiring system according to claim 1, comprising several ACPs (7) mounted in series on the optical trunk cable (4).

3. Wiring system according to claim 2, in which the optical trunk cable (4) forms an optical ring on which the ACPs (7) are mounted in series.

4. Wiring system according to claim 2 or 3, in which one of the ACP (7) of the ring constitutes a bridge ACP which is linked to the main distribution frame (1) by the optical trunk cable (4).

5. Wiring system according to any one of the preceding claims, in which the power cable (11) is a flexible electrical bus bar, the ACP (7) being linked to the electrical bus bar by an electrical lead (111) equipped with a self-stripping connector (112) in contact with the electrical bus bar.

6. Wiring system according to any one of the preceding claims, also comprising at least one twisted-pair trunk cable (5) connected to the main distribution frame (1) which is equipped with a pre-assembled connector unit (3) comprising a module 110 (31) linked to an RJ21 connector (33), the module 110 (31) residing in a 19" panel (14) mounted on a 19" rack (11) of the main distribution frame (1), the twisted-pair trunk cable pairs (5) linking the RJ21 connector (33) to another pre-assembled connector unit module 110/RJ21 connector (3) installed in a service shaft (Gt), at least one twisted-pair trunk cable (6) linking the connector unit (3) to at least one RJ45 connector of a DIN box (75) of the box (7).

7. Wiring system according to claim 6, in which the pre-assembled connector unit module 110/RJ21 connector (3) installed in the service shaft (Gt) links the different boxes (7) in star configuration by means of respective 4 twisted-pair trunk cables (6).

8. Wiring system according to any one of the preceding claims, in which the ACP (7) comprises a box (70) received in a fixed frame (8) suitable for being housed in a raised floor (F), the box (70) pivoting about a horizontal pin from an integrated position so as to expose a side entry face (7a) of the box (70) in an extracted position.

9. Wiring system according to claim 8, in which the box (70) of the ACP (7) is held in the extracted position by a cylinder (83), the side entry face (7a) advantageously forming a lid equipped with a locking system (7c) which makes it possible to lock both the lid in the closed position and the box in the integrated position.

10. Wiring system according to any one of the preceding claims, in which the ACP comprises a cabinet suitable for the incorporation of components exclusively having the DIN format, suitable for housing in a service shaft and in furniture.

11. Wiring system according to any one of the preceding claims, in which the main distribution frame (1) comprises at least one space for coiling trunk cable (1d) for storing excess length of trunk cable therein.

12. Wiring system according to any one of the preceding claims, in which the main distribution frame (1) comprises at least one side access door (16) giving access to a receiving space (1 c) provided with a 19" rack.

13. Wiring system according to any one of the preceding claims, in which the DIN box (73, 75) comprises a body (7a) and at least one moveable cover (7b, 7c) forming receiving slots (7d) for optical connection blocks or twisted pairs, the cover (7b, 7c) advantageously being snapped onto the body (7a) in a movable fashion.
